## Europäisches Patentamt

## European Patent Office

## Office européen des brevets

(19)

(11) Veröffentlichungsnummer: **0 091 034**
**B1**

(12)

# EUROPÄISCHE PATENTSCHRIFT

(45) Veröffentlichungstag der Patentschrift:
**08.06.88**

(51) Int. Cl.⁴: **G 01 V 3/11**

(21) Anmeldenummer: **83102984.8**

(22) Anmeldetag: **25.03.83**

(54) **Anordnung zur Erfassung von Metallgegenständen in einem Materialfluss.**

(30) Priorität: **01.04.82 SE 8202094**

(43) Veröffentlichungstag der Anmeldung:
**12.10.83 Patentblatt 83/41**

(45) Bekanntmachung des Hinweises auf die Patenterteilung:
**08.06.88 Patentblatt 88/23**

(84) Benannte Vertragsstaaten:
**DE FR GB**

(56) Entgegenhaltungen:
**DE-A-1 548 159**
**GB-A-2 004 069**
**US-A-4 118 662**
**US-A-4 128 803**
**US-A-4 263 551**

(73) Patentinhaber: **ASEA AB, S-721 83 Västeras (SE)**

(72) Erfinder: **Lenander, Bo, Kumlagatan 9, S-723 42 Västeras (SE)**
Erfinder: **Thegel, Lennart, Ringduvegatan 81, S-724 70 Västeras (SE)**

(74) Vertreter: **Boecker, Joachim, Dr.- Ing., Rathenauplatz 2-8, D-6000 Frankfurt a.M. 1 (DE)**

LIBER, STOCKHOLM 1988

**0 091 034**

**Beschreibung**

Die vorliegende Erfindung betrifft eine Anordnung zur Erfassung von Metallgegenständen in einem Materialfluß gemäß dem Oberbegriff des Anspruches 1.

Derartige Anordnungen werden u.a. dazu benutzt, Metallgegenstände in einem Materialfluß, von z. B. Kohle, Erz, Blockholz, Holzspäne oder Holzstoff und dergleichen zu erfassen, wobei die Suchspule so ausgebildet und plaziert sein kann, daß der Materialfluß an der Spule vorbei oder besser durch die Spule hindurchgeht.

Zweckmäßig wird die Suchspule aus einer Primärspule und einer Sekundärspule aufgebaut, wobei die Sekundärspule in zwei gleiche Spulen unterteilt ist, die symmetrisch zu jeder Seite der Primärspule angeordnet werden, wobei die Längsachsen aller drei Spulen zusammenfallen. Die beiden Sekundärspulen sind elektrisch gegensinnig in Reihe geschaltet, so daß die resultierende Spannung der beiden Sekundärspulen im wesentlichen Null ist, solange kein Metallgegenstand in den Erfassungsbereich der Spule gelangt. Hierdurch wird eine hohe Empfindlichkeit der Anordnung erzielt.

Bei einer solchen Anordnung tritt jedoch das Problem auf, daß infolge ihrer großen Empfindlichkeit unerwünschte Erfassungssignale auftreten, die von harmlosen und uninteressanten Gegenständen ausgelöst werden. Dabei kann es sich beispielsweise um Gegenstände im Materialfluß handeln, die eine geringe Leitfähigkeit haben, oder es kann sich um größere Gegenstände aus Eisen oder anderem Metall handeln, die sich in der Umgebung der Meßanordnung befinden. Ein Beispiel für Gegenstände mit einer niedrigen Leitfähigkeit ist saures Blockholz oder anderes feuchtes Material.

Aus der GB-A-2 004 069 ist ein transportabler Metalldetektor zum Auffinden von Metallgegenständen im Erdreich bekannt. Dabei wird die Primärspule einer Suchspule mit zwei Strömen unterschiedlicher Frequenz gespeist, und die in die Sekundärspule dieser Suchspule induzierten Spannungen werden getrennt und über Verstärker einem Substraktionsglied zugeführt. Um den Einfluß von Störsignalen durch die Leitfähigkeit des feuchten Erdreiches auszuschließen, wird das Signal der Sekundärspule mit der kleineren Frequenz vielfach verstärkt, so daß bei der Differenzbildung das vom feuchten Erdreich herrührende Störsignal herausfällt. Zur Beseitigung von Störsignalen, die durch ferritisches Material im Erdreich hervorgerufen werden, ist eine komplizierte Rückkopplungsschaltung mit einem weiteren eine Schaltfrequenz liefernden Oszilator vorhanden, wobei eine Frequenzmodulation des einen Ausgangssignals der Sekundärspule herbeigeführt wird. In den Rückkopplungszweig befindet sich auch ein phasenempfindlicher Detektor, über den ein steuerbares Phasenverstellglied gespeist wird. In der eigentlichen Meßschaltung sind keine phasenempfindlichen Detektoren vorhanden.

Aus der US-A-4 263 551 ist ein Meßgerät bekannt, das zur Feststellung von Metallgegenständen bei der Untersuchung von Gepäck oder Personen dient. Dabei soll dieses Meßgerät im Stande sein, Form und Größe der Metallgegenstände zu erkennen. Zu diesem Zweck wird eine aus Primärspule und Sekundärspule bestehende Suchspule zeitlich nacheinander mit einer großen Anzahl von Frequenzen gespeist, wobei das Ausgangssignal der Sekundärspule auf eine entsprechende Anzahl von phasenempfindlichen Detektoren geschaltet ist. Diese erfassen nacheinander für die ihnen jeweils zugeordnete Frequenz die resistive Komponente des Ausgangssignals der Suchspule. Diese Meßwerte werden durch die zugehörige Frequenz geteilt und dann zu einer Kurve zusammengestellt, die in einem Rechner durch Vergleich mit entsprechenden Kurven bekannter Gegenstände, beispielsweise bestimmter Waffen, analysiert wird. Mit der Beseitigung von Störeinflüssen befaßt sich diese Druckschrift nicht. Solche Störeinflüsse werden entweder als nicht vorhanden angesehen, oder es wird davon ausgegangen, daß die Nutzsignale hinreichend stark sind.

Aus der US-A-4 128 803 ist ein tragbares Metallsuchgerät bekannt, welches zum Suchen wertvoller Metalle im Erdreich dient. Dieses Gerät soll in der Lage sein zwischen eisenhaltigen Metallen und nichtwertvollen Nichteisenmetallen einerseits und wertvollen Nichteisenmetallen andererseits zu unterscheiden. Das Gerät arbeitet mit einer Suchspule, welche mit einem einzigen Strom einer bestimmten Frequenz gespeist wird. Das von der Empfangsspule aufgenommene Signal wird zwei verschiedenen Synchrondemodulatoren zugeführt, von denen einer auf die Wirkkomponente und der andere auf die Blindkomponente des Meßsignals anspricht. Beide Synchrondemodulatoren werden mit verschiedener Phasenverschiebung betrieben. Die Ausgangssignale der beiden Synchrondemodulatoren werden Bandpaßfiltern zugeführt und mittels eines dritten Synchrondemodulators weiter verarbeitet, dessen Ausgangssignal über ein Tiefpaßfilter und einen Schwellwertverstärker auf eine Torschaltung für ein Anzeigesignalgerät geschaltet wird. Die Arbeitsfrequenz kann auf einen bestimmten Wert voreingestellt werden.

Der Erfindung liegt die Aufgabe zugrunde bei einer Anordnung zur Erfassung von Metallgegenständen in einem Materialfluß die eingangs genannten Störsignale auszuschalten, die von schwach leitenden Substanzen im fließenden Material oder von größeren leitenden Gegenständen in der Umgebung der Suchspule herrühren. Auf diese Weise soll es ermöglicht werden, daß die Anordnung trotz solcher Störquellen mit einer hohen Empfindlichkeit arbeiten kann.

Zur Lösung dieser Aufgabe wird eine Anordnung zur Erfassung von Metallgegenständen in einem Materialfluß gemäß dem Oberbegriff des Anspruches 1 vorgeschlagen, welche erfindungsgemäß die im kennzeichnenden Teil des Anspruches 1 genannten Merkmale hat.

Vorteilhafte Ausgestaltungen der Erfindung sind in den weiteren Ansprüchen genannt.

Durch die phasengesteuerten Gleichrichter werden die in die Sekundärspule der Suchspule induzierten Sekundärspannungen unterschiedlicher Frequenzen voneinander getrennt. Durch die nachgeschalteten Rechenglieder erhält man Signale, die zu erfassenden Metallgegenständen im Materialfluß entsprechen,

2

während uninteressante Signale eliminiert werden.

Durch die Verwendung von Strömen mit verschiedenen Frequenzen und Anpassung der entsprechenden gleichgerichteten Sekundärspannungen in richtiger Weise ist es gemäß der Erfindung möglich, uninteressante Signale von den relevanten Signalen zu trennen.

Gemäß einer Weiterentwicklung der Erfindung werden die Gleichrichter für die Sekundärspannungen mit einem Phasenwinkel gesteuert, der gleich oder annähernd den Wert Null hat, so daß die imaginären Teile der Signalspannungen unterdrückt werden, die sonst Störungen verursachen könnten.

Anhand der Figuren soll die Erfindung näher erläutert werden. Es zeigen

Fig. 1 den prinzipiellen Aufbau eines Ausführungsbeispiels einer Anordnung gemäß der Erfindung,

Fig. 2 den Verlauf des Ausgangssignals einer Suchspule für den Fall, daß ein Metallpartikel die Suchspule passiert,

Fig. 3 ein Diagramm von Signalen, die von Materialien unterschiedlicher Leitfähigkeit erzeugt werden in Abhängigkeit der verwendeten Stromfrequenzen,

Fig. 4 eine Darstellung nach Art von Fig. 3, welche die Abhängigkeit der Signale von der Größe der leitenden Gegenstände zeigt,

Fig. 5 Diagramme, bei denen die Signale von der Größe der leitenden Gegenstände unabhängig sind,

Fig. 6 Diagramme, welche die Abhängigkeit der größenunabhängigen Signale von einer unterschiedlichen Größe der Leitfähigkeit zeigen.

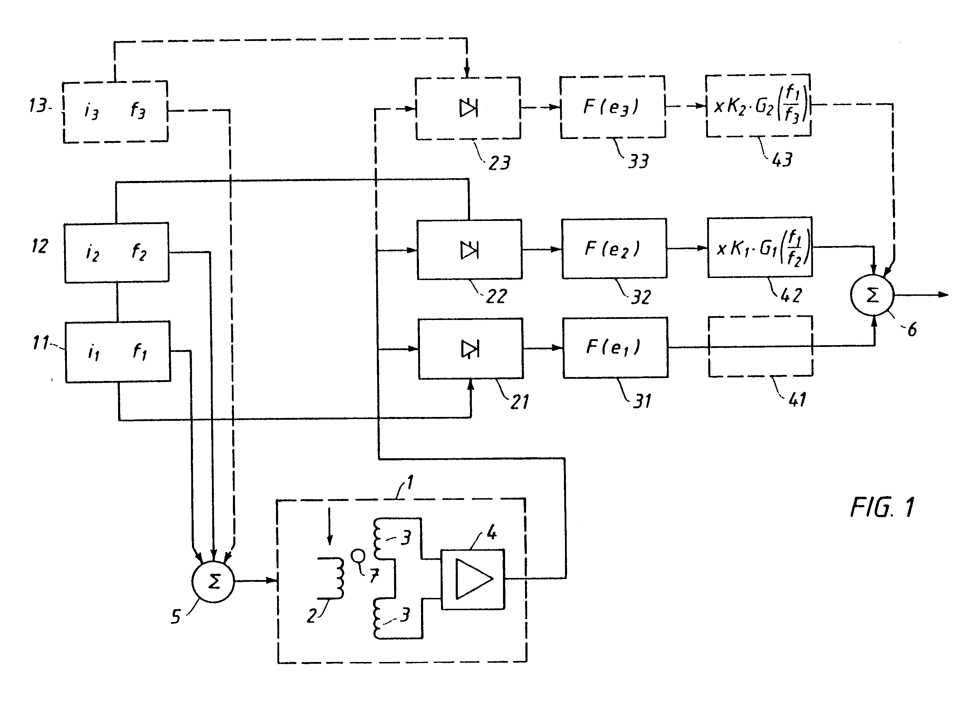

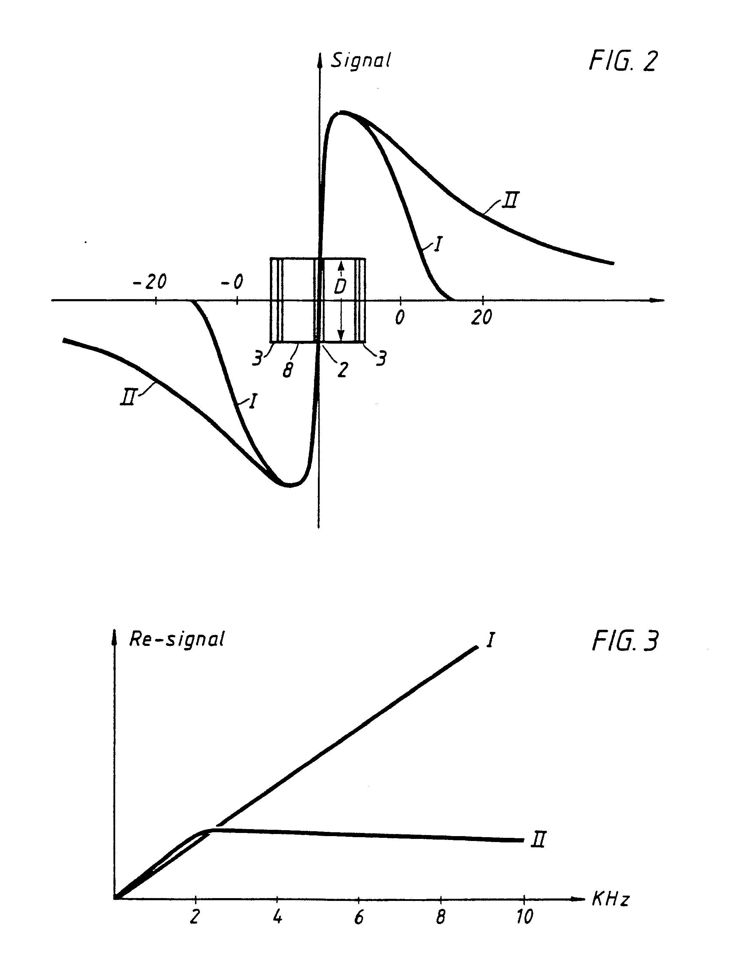

Figur 1 zeigt die Suchspule 1, zu der eine Primärspule 2 und zwei gegensinnig in Reihe geschaltete Sekundärspulen 3 gehören, die an einen Verstärker 4 angeschlossen sind, der das Ausgangssignal für die weitere Verarbeitung liefert. Die Spulen 2 und 3 sind zweckmäßigerweise auf einem Rohr plaziert, durch das der Materialfluß hindurchläuft, so wie es in Figur 2 näher gezeigt ist.

Die Primärspule 2 wird von einem Summierungsglied 5 mit einem zusammengesetzten Strom gespeist. An das Summierungsglied werden wenigstens zwei, in dem in Figur 1 gezeigten Fall drei, Wechselstromquellen 11, 12, 13 angeschlossen, deren Ströme i1, i2, i3 verschiedene Frequenzen f1, f2, f3 haben. Die Ausgangsspannung des Verstärkers 4 wird an Gleichrichter 21, 22, 23 angeschlossen, die den speisenden Wechselströmen entsprechen. Diese Gleichrichter sind eingangsseitig parallelgeschaltet und werden von den entsprechenden Wechselströmen mit einem bestimmten Phasenwinkel gesteuert, der für alle Gleichrichter derselbe ist.

Die Größe der Ströme i1, i2, i3 wird vorzugsweise so gewählt, daß die durch sie in den Sekundärwicklungen induzierten Spannungen e1, e2, e3 gleichgroße Effektivwerte haben, was also bedeutet, daß die Größe der Ströme zueinander umgekehrt proportional der Größe ihrer Frequenzen ist. Das Produkt aus Effektivwert des Stromes und Frequenz ist also für alle drei Ströme gleich groß, d.h. i1 x f1 = i2 x f2 = i3 x f3.

Theoretisch kann man sich verschieden große Steuerwinkel für die Gleichrichter vorstellen. Steuert man mit dem Steuerwinkel 0°, so erhält man den Realteil der Ausgangsspannung, und steuert man mit dem Steuerwinkel 90°, erhält man den Imaginärteil dieser Spannung. Wenn man den Steuerwinkel 0° wählt, so erhält man, wie erwähnt, den Realteil, was den resistiven (ohmschen) Verlusten in leitenden Substanzen im Materialfluß entspricht. Dies ist im allgemeinen vorzuziehen, da die meisten Störeinflüsse, wie z. B. Vibrationen in der Suchspule, magnetisches Hintergrundmaterial usw., hauptsächlich den imaginären Teil des Signals beeinflussen. Dies schließt jedoch nicht aus, daß es in bestimmten Fällen zweckmäßig sein kann, von dem Steuerwinkel 0° abzuweichen und in einigen Fällen z. B. auch den imaginären Teil beim Steuerwinkel 90° anzuwenden.

Dadurch, daß man die einzelnen Gleichrichter mit demselben Phasen- oder Steuerwinkel im Verhältnis zu dem entsprechenden Primärstrom steuert, erhält man von jedem Gleichrichter ein Signal, das von diesem entsprechenden Primärstrom herrührt, während Signale mit anderen Frequenzen unterdrückt werden. Diese Wirkung wird verstärkt, wenn die verschiedenen Frequenzen in ganzzahligen Verhältnissen zueinander stehen, wobei diese Verhältniszahlen vorzugsweise durch zwei teilbar sind, ohne ihren ganzzahligen Charakter zu verlieren. Um störende Oberwellen zu vermeiden, müssen die Primärströme außerdem möglichst sinusförmig sein.

Die Ausgangssignale der Gleichrichter 21 - 23 werden in Glättungsfiltern 31, 32, 33 geglättet, von denen man Gleichspannungssignale F(e) erhält, die den einzelnen Sekundärspannungen e1, e2, e3 entsprechen. Diese Signale werden in einem oder mehreren Rechengliedern behandelt, denen ein Summierungsglied 6 für die verschiedenen Signale nachgeschaltet ist. Das der Spannung mit der niedrigsten Frequenz entsprechende Signal, in dem gezeigten Fall das Signal F(e1), wird zweckmäßig direkt an das Summierungsglied 6 angeschlossen, während die übrigen Signale in den Rechengliedern mit einem Faktor KxG ($\frac{f_n}{f_1}$) multipliziert werden, wobei K ein konstanter Faktor ist, dessen Größe im allgemeinen ungefähr 1 beträgt, während G eine Funktion des Verhältnisses zwischen der niedrigsten Frequenz und der entsprechenden Signalfrequenz ist, wie es nachstehend näher beschrieben wird. Wie viele verschiedene Frequenzen und zugehörende Gleichrichter usw. erforderlich sind, und wie die entsprechenden Signale verarbeitet werden, hängt davon ab, welche Störungen eliminiert werden sollen. Dies wird nachstehend näher erläutert.

Vorher soll jedoch auf Figur 2 eingegangen werden, aus der der Aufbau der Suchspule hervorgeht sowie der Verlauf des Signals, wenn ein Metallpartikel 7 (Fig. 1) die Spule passiert. Figur 2 zeigt ein im Sinne der Zeichnung in horizontaler Richtung verlaufendes Rohr 8, auf dessen Umfang die Spulen der Suchspule plaziert sind, und zwar die Primärspule 2 in der Mitte und davor und dahinter in Achsrichtung des Rohres in gleichem Abstand von der Primärspule je eine Sekundärspule 3. Figur 2 zeigt ferner ein Koordinatensystem, dessen

3

Abszisse mit der Achse der Suchspule und des Rohres 8 zusammenfällt. Der Materialfluß verläuft in Richtung der Abszissenachse durch das Rohr 8. Durch den symmetrischen Aufbau der Suchspule und die Gegeneinanderschaltung ihrer Sekundärspulen wird erreicht, daß das Ausgangssignal der Suchspule ungefähr Null ist, solange keine magnetischen oder elektrisch leitenden Gegenstände sich im Erfassungsbereich der Spule befinden. Wenn nun ein leitendes Partikel vom Materialfluß beispielsweise in Richtung von links nach rechts befördert wird, so wird dieses von dem Magnetfeld der Suchspule beeinflußt, was zunächst am stärksten von der linken Sekundärspule erfaßt wird, so daß auf der Sekundärseite eine negative Differenzspannung anwächst. Dieses Signal steigt bis zu einem Maximum an, dessen Lage von den Spulenabmessungen abhängt. Danach nimmt das Signal schnell ab und erreicht den Wert Null, wenn das Partikel die Mitte der Primärspule passiert. Danach wächst das Signal genauso schnell wie es zuvor abfiel auf einen positiven Maximalwert an, nach dessen Durchschreiten es langsam auf Null abfällt. In Figur 2 zeigt die Kurve 1 das Signal im linearen Maßstab und die Kurve 2 im logarithmischen Maßstab.

Als erstes Beispiel für ein Störsignal sei eine schwach leitende Substanz im Materialfluß genannt, insbesondere für den Fall, daß diese schwach leitende Substanz eine verhältnismäßig große Ausdehnung hat. Dies kann beispielsweise beim Sortieren von Blockholz vorkommen, bei dem eingewachsene Metallpartikel unerwünschte Folgen haben können und daher aussortiert werden müssen, bei dem aber auch ein durch und durch saurer Stamm ein Signal für das Vorhandensein einer leitenden Substanz auslösen kann, obwohl dieser Stamm bei seiner Weiterverarbeitung völlig harmlos ist.

Es hat sich jedoch gezeigt, daß das Signal für verschiedene leitende Substanzen, die in den Erfassungsbereich der Spule gelangen, stark frequenzabhängig ist, und daß eine Abhängigkeit des Signals ferner von der Leitfähigkeit des Materials besteht, so wie es Figur 3 zeigt. Figur 3 zeigt den Zusammenhang zwischen der Frequenz und dem reellen Teil des vom leitenden Material verursachten Signals, wobei auf der Abszisse die Frequenz in kHz aufgetragen ist. Die Kurve I entspricht einem Material mit niedriger Leitfähigkeit, das in dem vorliegenden Fall von einem Behälter mit starker Salzlösung stammt, während die Kurve II ein Metallpartikel von einigen Millimeter Ausdehnung, beispielsweise einem Kupferzylinder mit einem Durchmesser von 5 mm entspricht. Man erkennt, daß die Kurve I für die Salzlösung linear ansteigt, während die Kurve II bis zu etwa einer Frequenz von 2 kHz linear ansteigt und danach aufgrund der Stromverdrängung in einen Sättigungsbereich gelangt.

Um diese Verhältnisse auszunutzen, verwendet man bei der Anordnung nach Figur 1 nur die beiden ersten Ströme i1, i2 und damit die Spannungen e1 und e2, während das Multiplikationsglied 42 mit dem Faktor $-k \times \frac{f_1}{f_2}$ arbeitet. Hierdurch erhält das Ausgangssignal des Summierungsgliedes 6 das folgende Aussehen:

$$F(e_1) - k \times F(e_2) \times \frac{f_1}{f_2} \qquad (1)$$

Werden für die Frequenzen f1 und f2 beispielsweise 2 und 8 kHz gewählt, so bedeutet dies für ein schwach leitendes Material, wie z. B. saures Holzmaterial, daß die beiden Terme der vorgenannten Gleichung nahezu gleich groß werden, wenn man den Faktor k mit ca. 1 wählt, so daß das Signal Null wird, während der zweite Term für einen guten Leiter klein wird, so daß das Summierungsglied 6 ein deutliches Ausgangssignal liefert.

Auf diese Weise werden nicht nur Signale von beispielsweise sauren Substanzen fortgefiltert, sondern man vermeidet auch Signale von sehr dünnen, leitenden Gegenständen, wie z. B. Aluminiumfolie, die bisher unerwünschte Signale verursacht haben.

Eine andere Störquelle, die unerwünschte Signale verursachen kann, ist leitendes Material in der Umgebung. Es ist leicht einzusehen, daß es schwierig sein kann, solches störendes Hintergrundmaterial in beispielsweise einer Industrieanlage zu vermeiden. Genauso schwierig ist es, die Suchspule gegen ein solches störendes Material abzuschirmen.

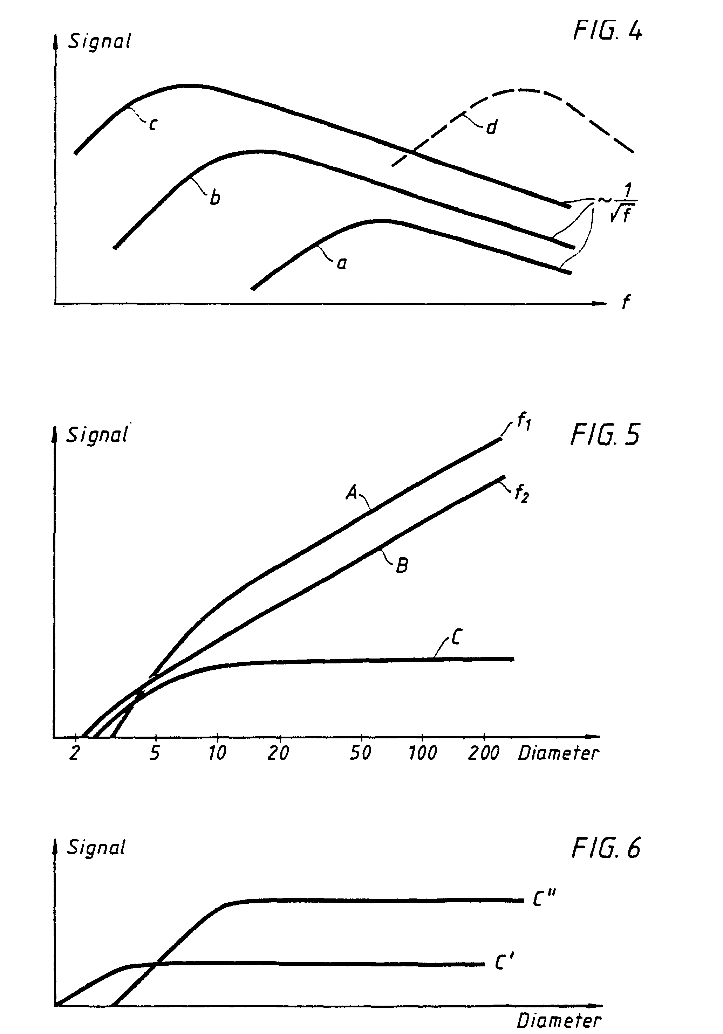

Aus Figur 2 geht hervor, daß die Empfindlichkeit der Suchspule mit dem Abstand von der Spule stark abnimmt, und daß die leitenden Partikel, die durch die Spule hindurchgeführt werden, ein kräftiges Signal erzeugen. Ebenfalls erkennt man, daß die Signalgröße in einem Abstand, der zweimal so groß wie der Durchmesser der Spule ist, im Verhältnis zu dem Maximalwert des Signals nahezu vernachlässigbar ist. Wenn man daher das Vorhandensein von leitendem Material innerhalb einer Zone mit einem Radius von dem ein- bis zweifachen des Durchmessers der Spule vermeiden kann, so erhält man von einem in die Spule hineingeführten Partikel ein ausreichend starkes Signal im Vergleich zu Signalen, die von ähnlichen Partikeln außerhalb der genannten Zone erzeugt werden. Das Problem besteht jedoch darin, daß die in Figur 2 gezeigten Kurven für ein Partikel bestimmter Größe gelten. Mit zunehmender Größe des leitenden Gegenstandes steigt auch das Signalniveau kräftig an, so daß ein verhältnismäßig weit entfernt liegender großer Gegenstand dasselbe Signal verursachen kann wie ein kleiner Partikel innerhalb der Spule. Durch die Erfindung ist es jedoch möglich, die Abhängigkeit von der Größe von Gegenständen, die sich in dem Erfassungsbereich der Spule befinden, dadurch zu kompensieren, daß man die Tatsache ausnutzt, daß die resistiven Wirbelstromverluste der Wurzel der Frequenz umgekehrt proportional sind, so wie es Figur 4 zeigt.

Die Kurven in Figur 4 sind im Prinzip dieselben wie in Figur 3, jedoch mit dem Unterschied, daß die Abszisse und die Ordinate in Figur 4 logarithmische Maßstäbe haben. Man sieht, daß die Kurven oberhalb einer bestimmten Frequenz linear abfallen entsprechend der umgekehrten Proportionalität zur Wurzel der Frequenz. Das Maximum der Kurven variiert in der Weise, daß bei zunehmender Ausdehnung des Gegenstandes auch der Maximalwert ansteigt, wobei der Maximalwert gleichzeitig bei kleineren Frequenzen auftritt. Die Kurve wird also mit zunehmender Größe des Gegenstandes nach links oben verschoben, so daß die Kurve a dem kleinsten Gegenstand und die Kurve c dem größten Gegenstand entspricht. Mit zunehmender Resistivität des Materials werden die Kurven nach rechts verschoben, so daß die Kurve d, wenn die Kurve c beispielsweise Kupfer entspricht, beispielsweise rostfreiem Stahl oder dergleichen entsprechen kann, wobei in beiden Fällen der Gegenstand ungefähr dieselbe Größe hat. Für rostfreien Stahl kann man sich andere den Kurven a und b entsprechende Kurven denken, die nur weiter nach rechts verschoben sind.

Figur 5 zeigt für zwei verschiedene Frequenzen f1 und f2, wie sich das den resistiven (ohmschen) Verlusten entsprechende Signal mit der Größe des Gegenstandes ändert, wobei f2 größer als f1 ist. Auf der Abszisse ist der Durchmesser des Gegenstands in mm im logarithmischen Maßstab abgebildet und auf der Ordinate das Signal im logarithmischen Maßstab. Wie anhand von Figur 4 erwähnt, steigt die Größe des Signals mit der Größe des Gegenstandes. In Abhängigkeit der Frequenz nimmt das Signal oberhalb einer bestimmten Frequenz ab, so daß die Kurve A für die Frequenz f1 höher liegt als die Kurve B für die Frequenz f2 für ein und denselben Gegenstand. Die Kurven A und B verlaufen mit ihren linearen Teilen nahezu parallel zueinander, so daß man, wenn man ein relatives Differenzsignal zwischen den Kurven bildet, ein nahezu konstantes Signal gemäß der Kurve C erhält, d.h. ein Signal, das von der Größe des leitenden Gegenstandes nahezu unabhängig ist. Eine solche Subtraktion von Signalen geschieht in Figur 1 dadurch, daß das Multiplikationsglied 42 die Wurzel des Frequenzverhältnisses enthält, so daß die resultierende Signalfunktion folgendes Aussehen hat:

$$k \times F(e2) \times \sqrt{\tfrac{f2}{f1}} - F(e1) \qquad\qquad (2)$$

Genau wie bei der Funktion (1) nach Figur 3 liegt k in der Größenordnung von 1, wobei es zweckmäßig sein kann, k etwas größer als 1 zu machen, was bedeutet, daß die Kurve nicht völlig waagerecht, sondern etwas ansteigend mit zunehmender Größe des Gegenstandes verläuft, so daß die Anordnung mit der Größe von leitenden Gegenständen etwas empfindlich wird.

Die Hauptsache ist jedoch, daß das Signal gemäß Funktion (2) von der Nähe des Gegenstandes zur Spule abhängig ist, so daß das Ausgangssignal leicht auf Werte begrenzt werden kann, die nur auftreten, wenn ein leitender Gegenstand durch die Spule läuft, während schwächere Signale fortgefiltert werden.

Wie aus Figur 4 hervorgeht, ist das Signal gemäß Funktion (2) von der Leitfähigkeit der Gegenstände abhängig, die man in dem Materialfluß erfassen will. Das bedeutet, daß der Verlauf der Kurve C in Figur 5 von der Leitfähigkeit des erfaßten Materials abhängig ist, so wie es in Figur 6 gezeigt ist, in der die Kurve C' z. B. für Kupfer gilt, während die Kurve C" für rostfreien Stahl gilt. Dies ist also bei der Wahl der Frequenzen f1 und f2 zu berücksichtigen.

Häufig haben jedoch die Gegenstände, die man in dem Materialfluß sucht (Nägel, Eisen- und Stahlstücke), denselben Charakter und damit denselben spezifischen Widerstand wie die großen Gegenstände, die zu Konstruktionen in der Umgebung gehören, während gleichzeitig Gegenstände mit geringem spezifischen Widerstand (z. B. Aluminium) von geringerer Bedeutung sind. In einem solchen Fall wählt man die Frequenzen am besten so, daß die Anordnung gegenüber Gegenständen mit geringem spezifischen Widerstand weniger empfindlich ist. Möchte man dagegen Gegenstände hoher Leitfähigkeit im Materialfluß von großen schlecht leitenden Gegenständen in der Umgebung unterscheiden können, so kann es notwendig sein, die Signale F(e1) und F(e2) in mehreren verschiedenen Beziehungen zu verbringen.

Eine solche Möglichkeit besteht darin, daß man gemäß Figur 1 zusätzlich eine Stromquelle 13 mit der Frequenz f3, einen phasengesteuerten Gleichrichter 23, ein Glättungsfilter 33 und ein Rechenglied (Multiplikationsglied) 43 vorsieht und diese drei Signale zu einer geeigneten Funktion verbindet. Dabei kann es eventuell erforderlich oder zumindest zweckmäßig sein, auch am Ausgang des Filters 31 ein Multiplikationsglied 41 anzuordnen. Dadurch erhält die Signalfunktion folgendes Aussehen:

$$k1 \times F(e1) + k2 \times F(e2) + k3 \times F(e3) \qquad\qquad (3)$$

Diese Funktion soll also Null oder nahezu Null sein so wohl beim Durchlauf von schlechtleitenden Gegenständen als auch bei der Anwesenheit von großen Gegenständen in der Umgebung.

Aus den Ausführungen zu den Figuren 3 bis 5 geht hervor, daß die von schwach leitenden Gegenständen herrührenden Signalspannungen F(e) annähernd die Bedingung

$$\frac{F(e1)}{f1} = \frac{F(e2)}{f2} = \frac{F(e3)}{f3} \qquad\qquad (4)$$

erfüllen und daß die von größeren leitenden Gegenständen in der Umgebung herrührenden Signalspannungen F(e) annähernd die Bedingung

$$F(e1) \times \sqrt{f1} = F(e2) \times \sqrt{f2} = F(e3) \times \sqrt{f3} \qquad\qquad (5)$$

erfüllen.

Eine Durchrechnung dieser drei Ausdrücke ergibt die folgende Signalfunktion:

$$\sqrt{\tfrac{f2}{f1}}\,[\sqrt{\tfrac{f3}{f2}} - \tfrac{f3}{f2}(1-k)] \times F(e1) + [\tfrac{f3}{f1} - \sqrt{\tfrac{f3}{f2}}] \times F(e2) + [\sqrt{\tfrac{f2}{f1}}(1-k) - \tfrac{f2}{f1}] \times F(e3)$$

In diesem Ausdruck ist ein Faktor (1 - k) eingeführt, wobei k eine Konstante nahe Null ist. Der Grund hierfür

0 091 034

besteht darin, daß man die Abhängigkeit des Signals von der Größe der Gegenstände nicht immer vollkommen kompensieren möchte. Einerseits möchte man oft eine gewisse Größenabhängigkeit des Signals haben, und vor allem möchte man vermeiden, daß Variationen in der Ausrüstung eine Überkompensation für die Größe zur Folge haben, so daß große Gegenstände im Materialfluß kleinere Signale verursachen als kleine Gegenstände. Es hat sich herausgestellt, daß es zweckmäßig ist, k = 0,01 - 0,1 zu wählen.

Auch wenn der vorstehende Ausdruck recht kompliziert ist, so vereinfacht er sich in der Praxis jedoch meistens bedeutend. Wird beispielsweise k = 0 und f3 = 4 x f2 = 16 x f1 gewählt, so erhält man die folgende einfache Signalfunktion:

$$-4 \times F(e1) + 9 \times F(e2) - 2 \times F(e3).$$

## Patentansprüche

1. Anordnung zur Erfassung von Metallgegenständen in einem Materialfluß mit einer Suchspule (1), zu der eine Primärspule (2) und eine Sekundärspule (3) gehören, mit mindestens zwei Stromquellen (11, 12) zur Speisung der Primärspule mit mindestens zwei Wechselströmen (i1, i2) mit verschiedenen Frequenzen (f1, f2), mit einer Signalverarbeitungsschaltung für die Sekundärspule, welche ein Signal abgibt, wenn ein Metallgegenstand in den Erfassungsbereich der Suchspule kommt, welche Signalverarbeitungsschaltung für jeden der genannten Wechselströme einen phasengesteuerten Gleichrichter (21, 22) enthält, der mit einem bestimmten Phasenwinkel im Verhältnis zu dem ihm zugeordneten Wechselstrom gesteuert wird, und mit einem Summierungsglied (6) für die Ausgangsgrößen der genannten Gleichrichter (21, 22), dadurch gekennzeichnet, daß mindestens einem Teil der phasengesteuerten Gleichrichter (21, 22) Rechenglieder (41, 42) nachgeschaltet sind und daß vom Summierungsglied (6) die Differenz gebildet wird aus der Ausgangsspannung eines Gleichrichters (21) und dem in einem (42) der Rechenglieder gebildeten Produkt aus der Ausgangsspannung eines zweiten Gleichrichters (22) und einem Faktor, der das Verhältnis zwischen den Frequenzen der beteiligten Wechselströme enthält.

2. Anordnung nach Anspruch 1, dadurch gekennzeichnet, daß der Phasenwinkel, mit dem die Gleichrichter (21, 22, 23) gesteuert werden, wenigstens annähernd Null ist.

3. Anordnung nach Anspruch 1 oder 2, dadurch gekennzeichnet, daß die Frequenzen (f1, f2, f3) der verschiedenen Wechselströme (i1, i2, i3) in einem ganzzahligen Verhältnis zueinander stehen und vorzugsweisen diese Verhältniszahlen alle durch zwei teilbar sind.

4. Anordnung nach einem der vorhergehenden Ansprüche, dadurch gekennzeichnet, daß zur Unterscheidung von Metallgegenständen von Gegenständen mit niedrigerer Leitfähigkeit zwei Stromquellen (11, 12) vorhanden sind, deren Ströme die Frequenzen f1 und f2 haben und daß das Rechenglied (6, 42) ein Signal nach der Funktion

$$F(e1) - k \times \frac{f1}{f2} \times F(e2)$$

errechnet, wobei F(e) ein Maß für die gleichgerichteten Sekundärspannungen (e1 und e2) und k ein konstanter Faktor ist, dessen Wert vorzugsweise annähernd 1 beträgt.

5. Anordnung nach einem der Ansprüche 1 bis 3, dadurch gekennzeichnet, daß zur Erzielung einer niedrigen Empfindlichkeit der Anordnung für leitendes Material in der Umgebung zwei Stromquellen (11, 12) vorhanden sind, deren Ströme die Frequenzen f1 und f2 haben, und daß das Rechenglied (6, 42) ein Signal entsprechend der Funktion

$$F(e1) - k \times \sqrt{\frac{f2}{f1}} \times F(e2)$$

errechnet, wobei F(e) ein Maß für die gleichgerichteten Sekundärspannungen (e1 und e2) und k ein konstanter Faktor ist, dessen Wert vorzugsweise annähernd 1 beträgt.

6. Anordnung nach einem der Ansprüche 1 bis 3, dadurch gekennzeichnet, daß zur Schaffung der Möglichkeit zur Trennung von Signalen, die von schwachleitenden Gegenständen im Materialfluß erzeugt werden von Signalen, die von größeren leitenden Gegenständen in der Umgebung erzeugt werden, drei Stromquellen (11, 12, 13) vorhanden sind, deren Ströme die Frequenzen f1, f2 und f3 haben, und daß die Rechenglieder (6, 41, 42) ein Signal nach der Funktion

$$k1 \times F(e1) + k2 \times F(e2) + k3 \times F(e3) \tag{1}$$

errechnen, wobei F(e) ein Maß für die gleichgerichteten Sekundärspannungen (e1, e2, e3) ist und die Konstanten k im Verhältnis zu den Frequenzen f von der Bedingung ausgehend gewählt sind, daß

a) die von schwach leitenden Gegenständen im Materialfluß herrührenden Spannungen F(e) nahezu die Bedingung

$$\frac{F(e1)}{f1} = \frac{F(e2)}{f2} = \frac{F(e3)}{f3}$$

6

erfüllen, und
b) die von größeren leitenden Gegenständen in der Umgebung herrührenden Spannungen F(e) nahezu die Bedingung

$$F(e1) \times \sqrt{f1} = F(e2) \times \sqrt{f2} = F(e3) \times \sqrt{f3}$$

erfüllen und
c) die genannte Funktion (I) in den genannten beiden Fällen nahezu Null wird.
7. Anordnung nach Anspruch 6, dadurch gekennzeichnet, daß die Funktion (I) die folgende Form

$$\sqrt{f2} \left[\sqrt{f3} - f2 (1 - k)\right] \times F(e1) + \left[f3 - \sqrt{f3}\right] \times F(e2) + \left[\sqrt{f2} (1 - k) - f2\right] \times F(e3)$$

hat, wobei k eine Konstante nahe Null ist.


## Claims

1. Arrangement for the detection of metallic objects in a flow of material with a scanning coil (1) comprising a primary coil (2) and a secondary coil (3), with at least two current sources (11, 12) for feeding the primary coil with at least two alternating currents (i1, i2) of different frequencies (f1, f2), with a signal processing circuit for the secondary coil, which delivers a signal if a metallic object enters the detection range of the scanning coil, which signal processing circuit comprises a phase-controlled rectifier (21, 22) for each of said alternating currents, which rectifier is controlled with a certain phase angle in relation to its associated alternating current, and with a summation device (6) for the output quantities of said rectifiers (21, 22), characterized in that at least part of the phase-controlled rectifiers (21, 22) are connected with their outputs to calculating circuits (41, 42) and that the summation device (6) forms the difference between the output voltage of a rectifier (21) and the product, formed in one (42) of the calculating circuits, of the output voltage of a second rectifier (22) and a factor containing the relationship between the frequencies of the involved alternating currents.

2. Arrangement according to Claim 1, characterized in that the phase-angle controlling the rectifiers (21, 22, 23) is at least approximately zero.

3. Arrangement according to any of Claims 1 or 2, characterized in that the frequencies (f1, f2, f3) of the different alternating currents (i1, i2, i3) are in an integer relationship with each other and that all said integers are preferably divisible by two.

4. Arrangement according to any of the preceding Claims, characterized in that for distinguishing between metallic objects and objects of low conductivity there are two current sources (11, 12), the currents of which have the frequencies (f1 and f2), and that the calculating circuit (6, 42) calculates a signal according to the function

$$F(e1) - k \times \frac{f1}{f2} \times F(e2)$$

where F(e) is a measure of the rectified secondary voltages (e1 and e2) and k is a constant factor the value of which is preferably approximately 1.

5. Arrangement according to any of Claims 1 to 3, characterized in that for obtaining a low sensitivity of the arrangement for conducting material in the vicinity, there are two current sources (11, 12), the currents of which have the frequencies (f1 and f2), and that the calculating circuit (6, 42) calculates a signal according to the function

$$F(e1) - k \times \sqrt{\frac{f1}{f2}} \times F(e2)$$

where F (e) is a measure of the rectified secondary voltages (e1 and e2) and k is a constant factor the value of which is preferably approximately 1.

6. Arrangement according to any of Claims 1 to 3, characterized in that for enabling a separation of signals originating from weakly conducting objects in the material flow from signals originating from larger conducting objects in the vicinity, there are three current sources (11, 12, 13), the currents of which have the frequencies (f1, f2 and f3), and that the calculating circuits (6, 41,42) calculate a signal according to the function

$$k1 \times F(e1) + k2 \times F(e2) + k3 \times F(e3) \tag{I}$$

where F(e) is measure of the rectified secondary voltages (e1, e2, e3) and the constant k is chosen in relation to the frequencies (f) starting from the condition, that
a) the voltages F(e) originating from weakly conducting objects in the material flow approximately comply with the condition

$$\frac{F(e1)}{f1} = \frac{F(e2)}{f2} = \frac{F(e3)}{f3} \text{ and}$$

b) the voltages F(e) originating from larger conducting objects in the vicinity approximately comply with the condition

$$F(e1) \times \sqrt{f1} = F(e2) \times \sqrt{f2} = F(e3) \times \sqrt{f3} \text{ and}$$

c) in said two cases said function (I) is approximately zero.

7. Arrangement according to Claim 6, <u>characterized</u> in that the function (I) takes the following form

$$\sqrt{\tfrac{f2}{f1}}\,[\sqrt{\tfrac{f2}{f3}} - \tfrac{f3}{f2}(1-k)] \times F(e1) + [\tfrac{f3}{f2} - \sqrt{\tfrac{f1}{f3}}] \times F(e2) + + [\sqrt{\tfrac{f1}{f2}}(1-k) - \tfrac{f2}{f1}] \times F(e3)$$

with k being a constant close to zero.

## Revendications

1. Dispositif pour détecter des objets métalliques dans un courant de matériaux, avec une bobine détectrice (1) à laquelle appartiennent une bobine primaire (2) et une bobine secondaire (3), avec au moins deux sources de courant (11, 12) pour alimenter la bobine primaire avec au moins deux courants alternatifs (i1, i2) de fréquences différentes (f1, f2), avec un circuit servant au traitement des signaux pour la bobine secondaire, et émettant un signal lorsqu'un objet métallique arrive dans la zone de détection de la bobine de détection, ledit circuit servant au traitement des signaux comportant, pour chacun desdits courants alternatifs, un redresseur (21, 22) commandé en phase, qui est commandé avec un angle de phase déterminé par rapport au courant alternatif qui lui est associé, et avec un sommateur (6) pour les grandeurs de sortie desdits redresseurs (21, 22), caractérisé par le fait qu'en aval d'au moins une partie des redresseurs (21, 22) commandés en phase sont montés des unités de calcul (41, 42) et que le sommateur (6) forme la différence entre la tension de sortie d'un redresseur (21) et le produit formé, dans l'une (42) des unités de calcul, de la tension de sortie d'un second redresseur (22) et d'un facteur qui comporte le rapport entre les fréquences de courants alternatifs participants.

2. Dispositif selon la revendication 1, caractérisé par le fait que l'angle de phase avec lequel les redresseurs (21, 22, 23) sont commandés est au moins égal approximativement à zéro.

3. Dispositif selon la revendication 1 ou 2, caractérisé par le fait que les fréquences (f1, f2, f3) des différents courants alternatifs (i1, i2, i3) sont entre eux dans un rapport entier, et, de préférence, les valeurs de ces rapports sont divisibles par deux.

4. Dispositif selon l'une des revendications précédentes, caractérisé par le fait que pour différencier des objets métalliques d'objets de plus faible conductivité, on prévoit deux sources de courant (11, 12) dont les courants possèdent les fréquences (f1, f2), et que l'unité de calcul (6, 42) calcule un signal selon la fonction

$$F(e1) - k \times \tfrac{f1}{f2} \times F(e2),$$

F(e) étant une mesure pour les tensions secondaires redressées (e1 et e2) et k étant un facteur constant dont la valeur est, de préférence, à peu près égale à 1.

5. Dispositif selon l'une des revendications 1 à 3, caractérisé par le fait que pour obtenir une faible sensibilité du dispositif pour un matériau conducteur, on prévoit, dans l'environnement, deux sources de courant (11, 12) dont les courants possèdent les fréquences (f1, f2), et que l'unité de calculs (6, 42) calcule un signal correspondant à la fonction

$$F(e1) - k \times \sqrt{\tfrac{f2}{f1}} \times F(e2),$$

F(e) étant une mesure pour les tensions secondaires redressées (e1 et e2) et k étant un facteur constant dont la valeur est, de préférence, à peu près égale à 1.

6. Dispositif selon l'une des revendications 1 à 3, caractérisé par le fait que pour créer la possibilité de séparation entre les signaux qui sont produits dans les objets de faible conductibilité dans le courant de matériaux, des signaux qui sont produits dans l'environnement ou par des objets de plus grande conductibilité, on prévoit trois sources de courant (11, 12, 13) dont les courants possèdent les fréquences (f1, f2, f3) et que les unités de calcul (6, 41, 42) calculent un signal selon la fonction

$$k1 \times F(e1) + k2 \times F(e2) + k3 \times F(e3) \tag{I}$$

F(e) étant une mesure pour les tensions secondaires redres sées (e1, e2, e3) et les constantes k étant choisies, en rapport avec les fréquences f, à partir de la condition que

a) les tensions F (e) provenant d'objets de faible conductibilité qui se trouvent dans le courant de matériaux, satisfassent à peu près la condition

$$\tfrac{F(e1)}{f1} = \tfrac{F(e2)}{f2} = \tfrac{F(e3)}{f3}, \text{ et}$$

8

**0 091 034**

b) les tensions F(e) provenant d'objets de plus grande conductibilité dans l'environnement, satisfassent à peu près la condition

$$F(e1) \times \sqrt{f1} = F(e2) \times \sqrt{f2} = F(e3) \times \sqrt{f3}, \text{ et}$$

c) ladite fonction (I) est à peu près nulle pour les deux cas sus-mentionnés.

7. Dispositif selon la revendication 6, caractérisé par le fait que la fonction (I) possède la forme suivante:

$$\sqrt{f1} [\sqrt{f3} - f2 (1 - k)] \times F(e1) + [f3 - f1] \times F(e2) + [\sqrt{f2} (1 - k) - f1] \times F(e3),$$

k étant une constante qui est à peu près égale à zéro.

FIG. 1

0 091 034

FIG. 2

FIG. 3

FIG. 4

Signal

c

b

a

d

$\sim \dfrac{1}{\sqrt{f}}$

f

FIG. 5

Signal

$f_1$

$f_2$

A

B

C

2    5    10    20    50    100    200    Diameter

FIG. 6

Signal

C″

C′

Diameter